# EUROPEAN PATENT SPECIFICATION

(11) **EP 3 470 708 B1**
(45) Date of publication and mention of the grant of the patent: **17.11.2021**
(21) Application number: 18000805.4
(22) Date of filing: 11.10.2018
(51) Int. Cl.: F16H 61/30, F16H 63/06, F16H 63/30, F15B 15/14

(54) **SETTING DEVICE FOR ACTUATING A SELECTOR ROD OF A TRANSMISSION**
STELLVORRICHTUNG ZUR BETÄTIGUNG EINER SCHALTSTANGE EINES GETRIEBES
DISPOSITIF DE RÉGLAGE POUR ACTIONNER UNE TIGE DE SÉLECTEUR D'UNE TRANSMISSION

(30) Priority: 13.10.2017 DE 102017009670
(43) Date of publication of application: 17.04.2019
(73) Proprietor: FTE automotive GmbH, 96106 Ebern (DE)
(72) Inventor: BERGER, Ralph, 97422 Schweinfurt (DE); HEIDER, Kevin, 96191 Viereth-Trunstadt (DE); GEBERT, Stefan, 96242 Sonnefeld (DE)
(74) Representative: Oppermann, Mark

(56) References cited:
- EP-A1- 1 413 774
- DE-A1-102007 039 483

## Description

### TECHNICAL FIELD

The present invention relates to a setting device for actuating a selector rod of a transmission according to the preamble of claim 1. In particular, the invention relates to a hydraulic setting device for actuating a selector rod of a transmission for motor vehicles such as used on large scale in the automobile industry for, for example, automatic mechanical transmissions. A setting device of that kind serves the purpose of, for example, actuating, i.e. displacing and optionally positioning, a selector fork, which is secured to a selector rod of the transmission, for a gear change.

### STATE OF THE ART

Document DE 10 2006 030 450 A1 discloses a hydraulic setting device for actuating a selector rod of a transmission for motor vehicles, with a cylinder chamber, which is provided in or at a transmission casing, for receiving a selector piston which is operatively connected with the selector rod and which divides the cylinder space into two work chambers selectably loadable with a pressure medium from a reservoir for the pressure medium, the chambers being separated from one another by means of a sealing arrangement arranged at the selector piston.

In this prior art (see Figs. 1 and 5 of this document) the selector piston injection-molded from a plastics material has the configuration of a so-called shank piston with a piston part and a hollow piston shank. The piston shank is plugged onto a projection, which is stepped in diameter, of the selector rod and secured to the selector rod in axial direction. In that case, the piston shank bears by an annular end surface remote from the piston part against a collar of the selector rod, which extends by its step through the piston shank and the piston part to an annular depression of the piston part on a side thereof remote from the piston shank. The selector piston is there retained by means of a slotted circlip, which engages in a radial groove provided at the step of the selector rod, and a washer bearing against the piston part. In this prior art it is necessary to provide a certain amount of axial play between selector rod and selector piston for the purpose of mounting the circlip.

However, such axial play can provide problems particularly if the stroke of the selector piston has to be detected as precisely as possible for the purpose of transmission control. Axial freedom of play of the connection between selector piston and selector rod is similarly desirable with respect to a gear engagement process that is as precise as possible, shortest possible selecting times, low wear in the transmission and avoidance of dead travel or idle power in the hydraulic control of the setting device.

Another form of connection between a selector piston, which is received in a work cylinder of a hydraulic selector device, and a selector rod is known from document DE 10 2007 039 483 A1, which defines the preamble portion of claim 1. In that (see Fig. 3 of this document), the selector piston is connected with the selector rod with the assistance of a securing screw, which is a collar screw or shoulder screw with a screw head, a collar section and a threaded section.

More precisely, in this prior art the selector piston - which is similarly constructed from plastics material as a shank piston with a piston part and piston shank - is mounted on an end, which is stepped in diameter, of the selector rod and bears by an annular end surface of its piston shank against a collar of the piston rod. Starting from a side of the selector piston remote from the piston shank the securing screw is screwed by its threaded section into a threaded bore of the selector rod so that the securing screw bears by its collar section against an annular end surface of the selector rod, whereas the screw head of the securing screw is in contact with the selector piston, more precisely the piston part thereof.

In that regard the selector piston, securing screw and stepped end of the selector rod have to be matched and toleranced relative to one another in terms of length so that excessive stresses do not arise in the selector piston and so that crushing of the selector piston, particularly in the region of the piston shank bearing against the collar of the selector rod, is prevented. Due to tolerances, a not insubstantial axial play between selector piston and selector rod can then arise, which even at the outset easily amounts to several tens of millimeters, increases still further in operation of the selector device and is undesired for the reasons already indicated above.

Setting or selecting devices are also used for the purpose of, in particular, pushing or drawing the selector rod axially into one of three different predetermined positions, namely two end settings and an intermediate middle setting. In order to detect the setting travels and setting positions a position transmitter is usually provided, for example a magnet, which transmitter is movable together with the selector rod and cooperates with a position sensor arranged to be fixed relative to the transmission housing, the detected values then being used for the purpose of moving the selector rod into the desired setting by suitable pressure loading of the selector device, which acts as a setting element, by way of electrically controlled hydraulic valves.

In this connection, document DE 10 2014 011 177 A1 discloses a hydraulic actuating device for actuation of setting elements in a motor vehicle transmission, in which several setting cylinders each with a respective cylinder housing and a setting piston guided therein to be longitudinally displaceable and able to be acted on hydraulically at both sides are combined to form a unit. In that case, a sensor for positional detection of a signal element mounted on the respective setting piston is associated with each cylinder housing.

In this prior art as well, the individual setting pistons consist of a plastics material (see Fig. 5 of this document), which by means of injection molding is here injection-molded onto a piston rod of a light metal to provide a mechanically positive couple, wherein the setting piston is provided at the edge of its end surface with a sensing projection which is formed integrally during the injection molding and on which a magnet as a signal element is mounted by being injection-molded around or in place by plastics material. The associated tubular selector rod is mounted on the end of the piston rod remote from the setting piston, for which purpose the piston rod has a threaded bore formed at an end. Two annular metallic guide parts are secured in the selector rod at an axial spacing, by way of which guide parts the selector rod is pushed onto the piston rod substantially free of radial play. A cap screw passing through the guide part remote from the piston is screwed into the threaded bore of the piston rod so as to tension-resistantly and compression-resistantly connect the selector rod and piston rod together. In that case, projections provided at the free end of the piston rod engage in recesses of substantially complementary form in the guide part remote from the piston so as to secure the piston rod and thus the setting piston against rotation in the cylinder housing at a selector fork, which is attached to the selector rod and suitably supported.

As a result, in this prior art the selector rod as a function of the pressure loading of the setting piston is displaced along its axis or held in a specific axial setting, wherein the sensor and the signal element as a consequence of the axial-play-free connection between the setting piston, piston rod and selector rod as well as the securing of the setting piston in the cylinder housing against rotation always remain in defined overlapping relationship. Any releasing or tightening, which, for example may be necessary in the case of servicing or repair, of the screw connection with the selector rod does of course require the transmission for that purpose to be (demounted and) opened so as to gain access to the setting piston securing provided at the transmission side.

Finally, document EP 1 413 774 A1 discloses a piston assembly for use in a hydraulic cylinder. The piston assembly comprises a piston head configured to slide axially within the hydraulic cylinder in response to changes in hydraulic pressure, wherein the piston head has an axial through-hole. Further, a piston rod is provided which has a proximal end axially abutting the piston head and a distal end extending outward through an end of the hydraulic cylinder, wherein the proximal end of the piston rod has a threaded bore co-axial with the axial through-hole in the piston head. The piston assembly furthermore comprises a bolt having a bolt head and a shank, the shank having an unthreaded portion adjacent the bolt head and a threaded portion away from the bolt head, wherein the bolt secures the piston head to the proximal end of the piston rod when the bolt shank is inserted through the axial through-hole in the piston head and threadingly engaged in the threaded bore in the piston rod. As a result, the piston head effects axial movement of the piston rod in response to changes in hydraulic pressure. According to an essential feature of this prior art, an annular washer is positioned and held captive on the unthreaded portion of the bolt shank between the bolt head and the piston head, wherein the washer has a flat face abutting the piston head so as to concentrically transfer a clamping force from the bolt head to the piston head when the bolt is threaded into engagement in the threaded bore in the piston rod so as to secure the piston head between the bolt head and the piston rod.

### OBJECT

The invention has the object of creating, for actuation of a selector rod of a transmission, a setting device of simplest and most economic possible construction which avoids the above disadvantages and the selector piston of which can be permanently connected with the selector rod in play-free and assembly-friendly manner.

### ILLUSTRATION OF THE INVENTION

This object is fulfilled by a setting device for actuating a selector rod of a transmission with the features of claim 1. Advantageous embodiments of the invention are the subject matter of the subclaims.

According to the invention, in a setting device for actuating a selector rod of a transmission - which comprises a cylinder housing, which is mountable in or on the transmission and in which a selector piston is received to be longitudinally displaceable, the piston bounding in the cylinder housing at least one work chamber selectably loadable with pressure and having a piston base body of plastics material, wherein the selector piston is provided with a recess extending along the longitudinal axis of the selector piston for reception of an end of the selector rod and is configured to be mounted on the end of the selector rod by means of a securing screw with a screw head - a washer protruding transversely of the longitudinal axis of the selector piston into the recess is embedded in the plastics material of the piston base body to provide a mechanically positively couple and as seen along the longitudinal axis of the selector piston forms on a front side a first support surface for the screw head of the securing screw and on a rear side a second support surface for the end of the selector rod so that the selector piston has play-free connection with the selector rod by means of the securing screw via the washer.

The forces for securing the selector piston to the selector rod thus act directly between metallic components of the setting device or the transmission, namely the screw head of the securing screw, the washer and the end of the selector rod, as a result of which high clamping forces for fixing the selector piston can be realized and at the same time the risk of these securing forces damaging the plastics material parts of the setting device is eliminated. The washer itself can - radially outside its place of clamping between screw head and selector rod - be embedded by a comparatively large surface area in the plastics material of the piston base body of the selector piston so that even in operation of the setting device excessive loading of the selector piston by way of the washer as a consequence of transmission of force between selector piston and selector rod can be reliably avoided. Thus, an enduring coupling of the selector piston to the selector rod free of axial play is achieved in an extremely simple and economic way, as a result of which precise gear engagement actions with short selection times are made possible, wear in the transmission is minimized and undesired dead travels or energy losses in the control of the setting piston are avoided.

Moreover, there is increased flexibility for the mounting or demounting of the setting device by comparison with the prior art outlined in the introduction. Thus, the selector piston can be mounted on the selector rod or demounted from the selector rod starting from the side remote from the selector rod and thus the transmission. Mounting or repair work of that kind in the case of, for example, leakage problems at the setting device does not necessarily require internal access to the transmission.

In principle, it is possible to provide a washer with non-plano-parallel sides, for example in the form of a corrugated washer, or with surfaces extending obliquely relative to one another, for example in order to ensure securing of the washer in the plastics material of the piston base body against rotation. However, with respect to introduction of the clamping forces between securing screw and selector rod over as much area as possible, it is preferred if the first support surface and/or the second support surface is or are planar and extends or extend substantially perpendicularly to the longitudinal axis of the selector piston.

Moreover, it is conceivable for the washer to protrude with respect to the longitudinal axis of the selector piston in radial direction only by sub-regions into the recess of the selector piston, for example by radially inwardly disposed tongues or webs. However, for preference the arrangement is such that the first support surface for the screw head of the securing screw and/or the second support surface for the end of the selector rod is or are formed to be annular, as a result of which annular contact maximized in terms of area is present. Although in that regard other ring shapes are also possible, with respect to a stress plot which is as uniform as possible it is preferred if the first support surface for the screw head of the securing screw and/or the second support surface for the end of the selector rod is or are circularly annular.

As far as the outer surface of the washer is concerned, the washer can advantageously have at the outer circumference a profile differing from a circularly round shape, as a result of which rotational fixing of the washer in the plastics material of the piston base body can be realized in extremely simple manner. Thus, in an advantageous embodiment this profile can have a plurality of corners distributed uniformly around the circumference of the washer. With respect to a particularly uniform stress plot in the plastics material of the selector piston and, in particular, not only in the production thereof with shrinkage phenomena in the plastics material, but also in operation of the setting device with swelling phenomena in the plastics material and mechanical loading of the connection, a profile having eight corners connected together by straight lines of equal length has been found to be a preferred compromise.

In order to achieve a smallest possible stress concentration in the plastics material of the piston base body and a high level of component strength it is additionally preferred if all edges of the washer embedded in the plastics material of the piston base body are rounded, i.e. provided with a radius.

In order to produce rotational fixing of the selector piston on the selector rod in simplest possible manner the recess in the selector piston at least in a sub-region can have a cross-section differing from the circular shape, which is configured to be mutually complementary with a cross-section of the end of the selector rod to be received in the recess. In that case, with respect to particularly simple production a design is preferred in which the cross-section of the recess in the selector piston is configured to received the end of the selector rod, which has a cylindrical basic shape and is provided at least in the mentioned sub-region with a flat extending parallel to the longitudinal axis and which can, for example, be milled from the solid material of the selector rod.

Moreover, in a particularly preferred embodiment of the setting device a sensor arrangement for detecting an axial position of the selector piston in the cylinder housing can be provided, the sensor arrangement comprising a sensor (for example, according to the Hall principle) fixed relative to the cylinder housing and a signal element (for example a magnet) mounted on the selector piston. The setting device as such thus already comprises the sensor means optionally necessary for detecting the setting movements which are produced. The mounting, which is widespread in the prior art, of individual signal elements and sensors on the setting elements (selector rods / selector forks) or in the interior of the transmission housing and the wiring thereof can, with advantage, be eliminated. The aforementioned freedom of the connection between selector piston and selector rod from axial play in that case advantageously makes possible precise detection of positions and travels of the selector piston which are truly representative of the thereby produced (consequential) movements of the setting elements (selector rod / selector forks). Advantageously, the piston base body can in that case be provided with an integrally formed projection for mounting of the signal element, which projection can be conjunctively formed in problem-free manner by injection molding, this being particularly advantageous with respect to economic production and a low parts count.

In principle, the selector piston can be a piston which from the aspect of basic shape is substantially cylindrical without external steps. However, a design of the setting device is preferred in which the selector piston is constructed in the form of a shank piston, wherein the piston base body has a piston head and a piston shank connected therewith, the piston head and piston shank being integrally formed from plastics material. In that regard the piston shank can advantageously provide, without subsequent machining, a smooth and clean sealing surface for a sealing element at the cylinder housing.

Further, in that case it is preferred particularly with respect to high component strength if the piston head and the piston shank of the selector piston are connected together by way of a connecting section of solid material in which the washer is embedded.

Finally, the washer can preferably consist of stainless steel, which not only is advantageous with respect to the durability of the washer, but also offers advantages in the case of a stroke-sensed design of the setting device, since the washer cannot be magnetized.

### BRIEF DESCRIPTION OF THE DRAWINGS

The invention is explained in more detail in the following on the basis of a preferred embodiment with reference to the accompanying partly schematic drawings, in which:
- Fig. 1: shows a broken-away longitudinal sectional view, in a scale enlarged relative to actual dimensions, of a setting device according to the invention for actuation of a selector rod of a transmission, the setting piston - which is fixedly connected with the selector rod - of which is disposed in a median stroke setting in an associated cylinder housing;
- Fig. 2: shows a longitudinal sectional view, which is again enlarged in scale, of the setting device according to Fig. 1 in correspondence with the detail circle II in Fig. 1, for illustration of how the selector piston is mounted free of play on the selector rod by means of a washer, which is embedded in a piston base body, and a securing screw;
- Fig. 3: shows a broken-away sectional view of the setting device according to Fig. 1 in correspondence with the section line III-III in Fig. 2, which shows further details of the washer in the selector piston;
- Fig. 4: shows a broken-away sectional view of the setting device according to Fig. 1 in correspondence with the section line IV-IV in Fig. 2, which illustrates, in particular, how the selector piston is secured with respect to the selector rod against rotation; and
- Fig. 5: shows a perspective exploded view, which is broken away on the right, of the setting device according to Fig. 1 obliquely from the front and top right, starting with a view of the free end of the selector rod.

Resilient or elastomeric components, namely the static and dynamic seals, are for simplification of the illustration shown in the drawings in undeformed state; in reality, these deformable components bear against the adjacent surfaces of adjoining components.

### DETAILED DESCRIPTION OF THE EMBODIMENT

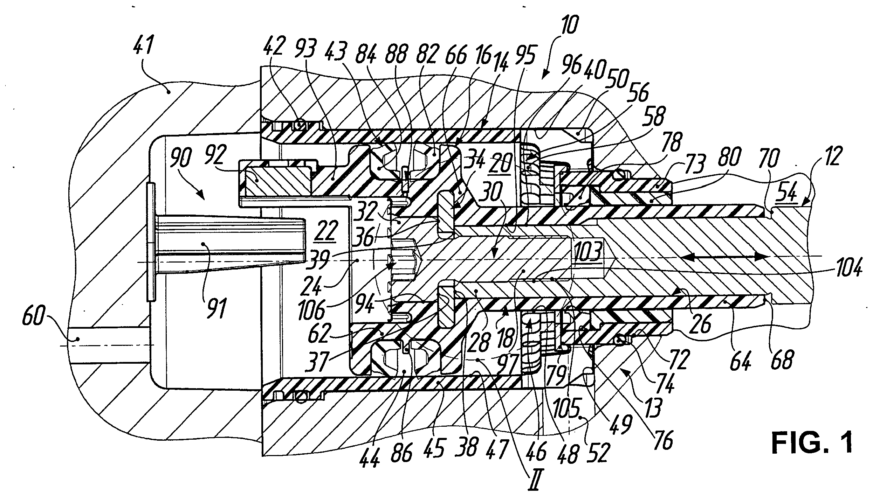

In the figures, the reference numeral 10 generally denotes a hydraulic setting device for actuation, i.e. in the present case axial displacement, of a selector rod 12 of a transmission, of which in Fig 1 apart from the selector rod 12 a transmission housing 13 is indicated. The setting device 10 has a cylinder housing 14, which can be mounted in or on the transmission, more precisely the transmission casing 13 thereof, and in which a selector piston 16 is received to be longitudinally displaceable. The selector piston 16 has a piston base body 18 of plastic and in the illustrated embodiment divides the cylinder housing 14 into two work chambers 20 and 22, which can be selectably loaded with pressure, and delimits these. In that case, the selector piston 16 is provided with a recess 26, which extends along a longitudinal axis 24 of the selector piston 16, for receiving an end 28 of the selector rod 12 and is mounted on the end 28 of the selector rod 12 by means of a securing screw 30 with a screw head 32.

As will be explained in more detail in the following, a washer 34 protruding transversely to the longitudinal, axis 24 of the selector piston 16 into the recess 26 is embedded with shape-locking couple in the plastics material of the piston base body 18. The washer 34 as seen along the longitudinal axis 24 of the selector piston 16 forms on a front side a first support surface 36 for the screw head 32 of the securing screw 30, more precisely an underside 37 of the screw head 32, and on a rear side a second support surface 38 for the end 28 of the selector rod 12, more precisely an end face 39 of the selector rod 12, so that the selector piston 16 is connected free of play with the selector rod 12 by means of the securing screw 30 via the washer 34.

In the illustrated embodiment the cylinder housing 14 is constructed as an insert part which is inserted into a stepped bore 40 in the transmission casing 13 and is fixed therein by means of a cover 41. The cover 41 is secured to the transmission casing 13 in a mode and manner not shown in more detail and statically sealed towards the environment. An O-ring 42 arranged in a radial groove at the outer circumference of the cylinder housing 14 statically seals the cylinder housing 14 relative to the stepped bore 40 in the transmission casing 13 and at this location separates the work chambers 20 and 22, which are formed in the cylinder housing 14, to be hydraulically sealed from one another. For dynamic sealing of the work chambers 20 and 22 relative to one another the selector piston 16 is provided with a sealing arrangement 43 which is described in more detail in the following and which when at least one of the work chambers 20 and 22 is loaded with pressure medium connects this with an auxiliary chamber 44 bounded by the sealing arrangement 43.

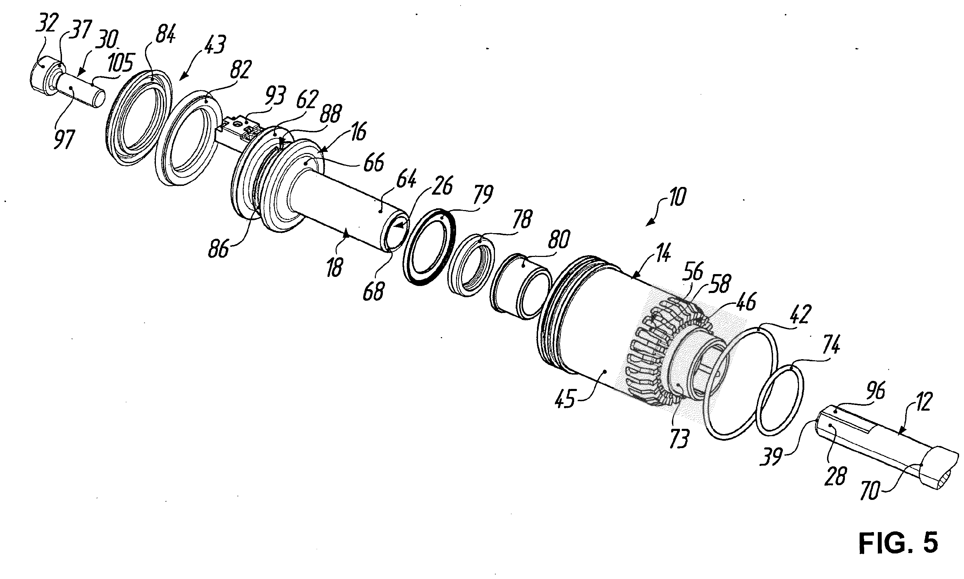

According to Figs. 1 and 5 the cylinder housing 14 produced by injection molding preferably from a plastics material such as polyphthalamide (PPA) with a predetermined proportion, for example 50%, of glass fibers is constructed to be substantially cup-shaped and has a casing section 45 and a base 46 connected therewith on the right in Fig. 1. The casing section 45 of the cylinder housing 14 forms, by its inner circumference, a cylinder wall 47 as guide surface for the sealing arrangement 43 at the selector piston 16. The base 46 of the cylinder housing 14 has a central opening 48 for passage of the selector rod 12 and together with a step 49 of the stepped bore 40 in the transmission casing 13 bounds an annular channel 50. The annular channel 50 communicates with a control connection 52, which is schematically illustrated in Fig. 1, in the transmission casing 13 for the work chamber 20 closest to an interior 54 of the transmission housing 13.

The base 46 of the cylinder housing 14 is additionally provided with a plurality of passages 56 which are distributed at a uniform angular spacing around the circumference and which are separated from one another by webs 58, as can be best seen in Fig. 5. The passages 56 ensure that there is a constant hydraulic connection between the work chamber 20, which is closest to the interior 54 of the transmission housing 13, and the annular channel 50 (for the sake of better clarity not all passages 56 and webs 58 at the base 46 of the cylinder housing 14 are marked by reference numerals in Figs. 1, 2 and 5).

Accordingly, the work chamber 20, which is on the right in Fig. 1, of the setting device 10 can be loaded with the pressure medium by way of the control connection 52, the annular channel 50 and the passages 56 in the base 46 of the cylinder housing 14. The cover 41 is provided with a control connection 60, which is similarly shown only schematically, for loading of the work chamber 22, which is on the left in Fig. 1, of the setting device 10 with pressure medium.

According to Figs. 1 and 5 the selector piston 16 is constructed in the form of a shank piston, in which the piston base body 18 has a piston head 62 and a hollow piston shank 64 connected therewith, the shank and head being integrally formed by injection molding from a plastics material such as, for example, polyphthalamide (PPA) with a predetermined proportion, for example 50%, of glass fibers. The piston head 62 and the piston shank 64 of the shank piston 16 are in that case connected together by way of a connecting section 66 of solid material in which the washer 34 is embedded, i.e. the piston base body 18 is not provided in the embedding region of the washer 34 with ribs, break-outs or the like. The piston head 62 and the piston shank 64 together bound the recess 26 by way of which the selector piston 16 is plugged onto the end 28 of the selector rod 12. In the state of the selector piston 16 being plugged onto the end 28 of the selector rod 12 and secured thereto in axial direction the piston shank 64 is spaced on the right in Fig. 1 by an end face 68 from a collar 70 of the selector rod 12.

The piston shank 64 together with the selector rod 12 extends through an opening 72 in the transmission casing 13 into the interior 54 of the transmission casing 13. In that case, the piston shank 64 surrounding the selector rod 12 is guided at the cylinder housing 14, for which purpose the cylinder housing 14 has a projection 73 extending to the right in Fig. 1 from the base 46 of the housing and formed integrally with the cylinder housing 14 according to Fig. 5. The projection 73 extends through the opening 72 of the transmission casing 13 to the interior 54 thereof, in which case the projection 73 is statically sealed at its outer circumference relative to the opening 72 by means of an O-ring 74.

At the inner circumference the projection 73 has, initially, a step 76 for reception of a dynamic sealing element 78 in the form of a lip ring, which dynamically seals on the outer circumference of the piston shank 64. The dynamic sealing element 78 is retained in the step 76 by means of a securing element 79 in the form of a washer, which is secured in suitable manner to the base 46 of the cylinder housing 14, for example by means of an adhesive connection. The projection 73 of the cylinder housing 14 is lined at the inner circumferential side and adjoining the step 76 on the right in Fig. 1 with a collar bush 80 which for optimization of the friction couple with the piston shank 64 of the selector piston 16 guided in the collar bush 80 consists of a suitable low-friction plastics material such as, for example, polyetheretherketone (PEEK).

As additionally apparent from Fig. 1, the piston head 62 of the selector piston 16 has at the outer circumferential side a diameter which is somewhat smaller than the inner diameter of the cylinder wall 47 of the cylinder housing 14 and is provided thereat substantially centrally as seen in axial direction with an annular recess which on the one hand serves for reception of the sealing arrangement 43 at the selector piston 16 and on the other hand forms the annular auxiliary chamber 44. The sealing arrangement 43 comprises two seals 82 and 84 which are each arranged between a respective one of the work chambers 20 and 22 and the auxiliary chamber 44 and which are separated from one another by means of a radial web 86 remaining at the piston head 62.

The seals 82 and 84 are resilient or elastomeric grooved rings which are known per se and which are mounted oppositely to the usual installation position thereof at the selector piston 16, as a result of which in co-operation with a throttled connection 88 between the auxiliary chamber 44 and the work chamber 22 on the left in Fig. 1 a valve-like, self-ventilating function of the sealing arrangement 43 results. With respect to the further construction and function of the sealing arrangement 43 express reference may be made at this point to document DE 10 2006 030 450 A1.

The seals 82 and 84 have dynamic sealing co-operation with the cylinder wall 47 of the cylinder housing 14 so as to separate the end effective surfaces of the selector piston 16 (circular surface on the side of the piston head 62 on the left in Fig. 1 and circularly annular surface on the side of the piston head 62 on the right in Fig. 1) from one another and in that case to make possible a pressure difference at the selector piston 16 and thus a displacement of the selector piston 16. To that extent it is apparent that the selector rod 12 rigidly coupled with the selector piston 16 can be displaced to the left or right in Fig. 1 (see the double arrow in Fig. 1) depending on the pressure loading of the selector piston 16 by way of the work chamber 20 or the work chamber 22 or held in a specific axial setting.

In the illustrated embodiment the axial setting movements produced in this mode and manner are in addition subject to stroke detection, for which purpose a sensor arrangement 90 for detecting an axial position of the selector piston 16 in the cylinder housing 14 is provided, the sensor arrangement comprising a sensor 91 fixed to the cylinder housing and a signal element 92 mounted on the selector piston 16. In that case, the sensor 91, which, for example, comprises a Hall element and is electrically contacted in a manner known per se (not shown in Fig. 1), is suitably secured to the cover 41 so that the sensor 91 in the mounted state projects into the work chamber 22. According to Figs. 1 and 5 the piston base body 18 of the selector piston 16 is provided at the edge of its end surface facing the work chamber 22 with an integrally formed projection 93 for mounting the signal element 92. More specifically, in the illustrated embodiment the signal element 92 is a magnet mounted on the projection 93 of the selector piston,16 by injection-molding of plastics material therearound or thereon.

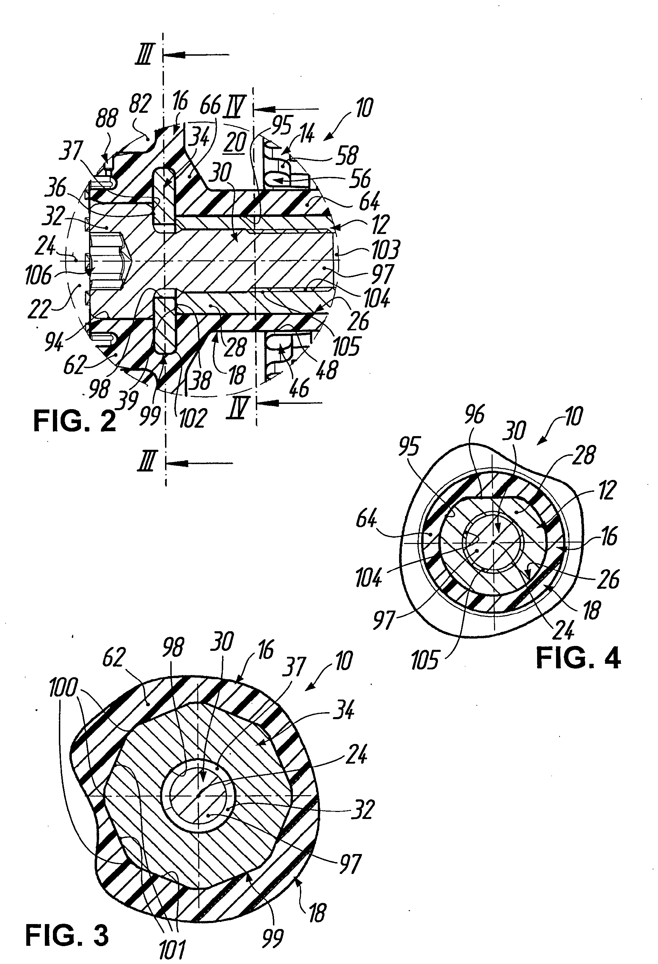

According to Figs. 1 and 2 the recess 26 in the piston base body 18 of the selector piston 16 has substantially the form of a stepped passage bore, wherein the screw head 32 of the securing screw 30 is tightly received in the diametrally enlarged region 94, which in Figs. 1 and 2 is on the left of the washer 34, of the recess 26. In the sub-region 95 - which is on the right of the washer 34 in Figs. 1 and 2 - of the recess 26, the recess 26 in the selector piston 16 on the one hand and the end 28 of the selector rod 12 received therein on the other hand have mutually complementary cross-sections differing from a circular shape so as to ensure securing of the selector rod 12 and the selector piston 16 against relative rotation.

More precisely, the end 28 of the selector rod 12 received in the recess 26 of the selector piston 16 has a cylindrical basic shape and is provided in (at least) the sub-region 95 with a flat 96 extending parallel to the longitudinal axis 24 of the selector piston 16, as can be best seen in Figs. 4 and 5, the flat extending in the illustrated embodiment according to Fig. 1 over approximately half the length of the piston shank 64. As a result, the selector piston 16 is secured to the selector rod 12 against turning and the rod is in turn supported in the transmission against turning, for example by way of a selector fork (not shown) fixed to the selector rod 12. As a consequence of the thus-produced securing of the selector piston 16 in the cylinder housing 14 against turning the sensor 91 and the signal element 92 of the sensor arrangement 90 constantly remain in defined overlapping relationship.

Further details with respect to the washer 34, which consists of stainless steel, and the embedding thereof in the plastics material of the piston base body 18 of the selector piston 16 can be inferred from Figs. 2 and 3. Accordingly, the washer 34 in the illustrated embodiment is formed from a flat material with plano-parallel surfaces so that the first support surface 36 for the screw head 32 and the second support surface 38 for the end 28 of the selector rod 12 are planar and in the state of the washer 34 being embedded in the plastics material of the piston base body 18 extend substantially perpendicularly to the longitudinal axis 24 of the selector piston 16. The washer 34 is centrally provided with a circularly round opening 98, the inner diameter of which is smaller than the smallest inner diameter in the sub-region 95 of the recess 26 in the piston base body 18, for passage of a screw shank 97 of the securing screw 30. As a result, the washer 34 protrudes, as seen in a direction transverse to the longitudinal axis 24 of the selector piston 16, from all sides into the recess 26 so that the first support surface 36 and the second support surface 38 of the washer 34 are annular, more precisely circularly annular as a consequence of the geometry of the opening 98.

As can be further inferred from Fig. 3, the washer 34 has at the outer circumference a profile 99 differing from a circularly round shape so that in the embedded state of the washer 34 a mechanically positive couple with the plastics material of the piston base body 18 excludes rotation of the washer 34 about the longitudinal axis 24 relative to the piston base body 18. In the illustrated embodiment the profile 99 has a plurality of corners 100 uniformly distributed around the circumference of the washer 34. More precisely, the profile 99 has in total eight corners 100 connected together by straight lines 101 of equal length. As can be best seen in Fig. 2, all edges 102, which are embedded in the plastics material of the piston base body 18, of the washer 34 - for the sake of better clarity, only one edge of the washer 34 is provided with a reference numeral in Fig. 2 - are rounded or cut off by a radius.

Finally, still to be mentioned with respect to the screw connection of the selector piston 16 with the selector rod 12 is that the selector rod 12 according to, in particular, Fig. 1 is centrally provided starting from the end face 39 of its free end 28 with a blind bore 103 having an inner threaded section 104 at the entry end. The screw shank 97 of the securing screw 30 on the other hand is provided with an outer threaded section 105 matching the inner threaded section 104 of the selector rod 12. Finally, for screwing the securing screw 30 by the outer threaded section 105 thereof into the inner threaded section 104 of the selector rod 12 the cylindrical screw head 32 of the securing screw 30 in the illustrated embodiment has a screw entraining profile 106 in multi-lobular socket form, here a hexalobular socket.

It is apparent particularly from Fig. 1 that the securing screw 30 is readily accessible from the side of the work chamber 22, which is remote from the interior of the transmission, of the setting device 10 when the cover 41 is not yet mounted on the transmission casing 13 or is removed therefrom. Thus, the securing screw 30 can be screwed into the end 28 of the selector rod 12 by a predetermined torque and optionally with the assistance of a liquid screw securing means, in which case the washer 34 is clamped in place by its support surfaces 36 and 38 flatly between the underside 37 of the screw head 32 and the end face 39 of the selector rod 12 and thus the securing screw 30 provides lasting play-free securing of the selector piston 16 to the selector rod 12. Equally, it is obviously possible to release the afore-described screw connection, for example in the case of repair, from the side, which is at the left in Fig. 1, of the work chamber 22 of the setting device 10.

### REFERENCE NUMERAL LIST

- 10: setting device
- 12: selector rod
- 13: transmission casing
- 14: cylinder housing
- 16: selector piston
- 18: piston base body
- 20: work chamber
- 22: work chamber
- 24: longitudinal axis
- 26: recess
- 28: end
- 30: securing screw
- 32: screw head
- 34: washer
- 36: first support surface
- 37: underside
- 38: second support surface
- 39: end face
- 40: stepped bore
- 41: cover
- 42: O-ring
- 43: sealing arrangement
- 44: auxiliary chamber
- 45: circumferential section
- 46: base
- 47: cylinder wall
- 48: opening
- 49: step
- 50: annular channel
- 52: control connection
- 54: interior of the transmission housing
- 56: passage
- 58: web
- 60: control connection
- 62: piston head
- 64: piston shank
- 66: connecting section
- 68: end face
- 70: collar
- 72: opening
- 73: projection
- 74: O-ring
- 76: step
- 78: dynamic sealing element
- 79: securing element
- 80: collar bush
- 82: seal
- 84: seal
- 86: radial web
- 88: throttled connection
- 90: sensor arrangement
- 91: sensor
- 92: signal element
- 93: projection
- 94: diametrally enlarged region
- 95: sub-region
- 96: flat
- 97: screw shank
- 98: opening
- 99: profile
- 100: corner
- 101: straight line
- 102: edge
- 103: blind bore
- 104: inner threaded section
- 105: outer threaded section
- 106: screw entraining profile

## Claims

1. Setting device (10) for actuating a selector rod (12) of a transmission, comprising a cylinder housing (14) which is mountable in or on the transmission and in which a selector piston (16) is received to be longitudinally displaceable, the piston bounding in the cylinder housing (14) at least one work chamber (20, 22) selectably loadable with pressure and having a piston base body (18) of plastics material, wherein the selector piston (16) is provided with a recess (26) extending along a longitudinal axis (24) of the selector piston (16) for reception of an end (28) of the selector rod (12) and is configured to be mounted on the end (28) of the selector rod (12) by means of a securing screw (30) with a screw head (32), **characterized in that** a washer (34) protruding transversely of the longitudinal axis (24) of the selector piston (16) into the recess (26) is embedded in the plastics material of the piston base body (18) to provide a mechanically positively couple and as seen along the longitudinal axis (24) of the selector piston (16) forms on a front side a first support surface (36) for the screw head (32) of the securing screw (30) and on a rear side a second support surface (38) for the end (28) of the selector rod (12) so that the selector piston (16) has play-free connection with the selector rod (12) by means of the securing screw (30) via the washer (34).

2. Setting device (10) according to claim 1, **characterized in that** the first support surface (36) and/or the second support surface (38) is or are planar and extends or extend substantially perpendicularly to the longitudinal axis (24) of the selector piston (16).

3. Setting device (10) according to claim 1 or 2, **characterized in that** the first support surface (36) and/or the second support surface (38) is or are annular.

4. Setting device (10) according to claim 3, **characterized in that** the first support surface (36) and/or the second support surface (38) is or are circularly annular.

5. Setting device (10) according to any one of the preceding claims, **characterized in that** the washer (34) has at the outer circumference a profile (99) differing from a circularly round shape.

6. Setting device (10) according to claim 5, **characterized in that** the profile (99) has a plurality of corners (100) uniformly distributed around the circumference of the washer (34) .

7. Setting device (10) according to claim 6, **characterized in that** the profile (99) has eight corners (100) connected together by straight lines (101) of equal length.

8. Setting device (10) according to any one of the preceding claims, **characterized in that** all edges (102), which are embedded in the plastics material of the piston base body (18), of the washer (34) are rounded.

9. Setting device (10) according to any one of the preceding claims, **characterized in that** the recess (26) in the selector piston (16) at least in a sub-region (95) has a cross-section differing from the circular shape, which is configured to be mutually complementary with a cross-section of the end (28) of the selector rod (12) to be received in the recess (26).

10. Setting device (10) according to claim 9, **characterized in that** the cross-section of the recess (26) in the selector piston (16) is configured to receive the end (28) of the selector rod (12), which has a cylindrical basic shape and is provided at least in the sub-region (95) with a flat (96) extending parallel to the longitudinal axis (24).

11. Setting device (10) according to any one of the preceding claims, **characterized by** a sensor arrangement (90) for detecting an axial position of the selector piston (16) in the cylinder housing (14), comprising a sensor (91) fixed relative to the cylinder housing (14) and a signal element (92) mounted on the selector piston (16).

12. Setting device (10) according to claim 11, **characterized in that** the piston base body (18) is provided with an integrally formed projection (93) for mounting of the signal element (92).

13. Setting device (10) according to any one of the preceding claims, **characterized in that** the selector piston (16) is constructed in the form of a shank piston, wherein the piston base body (18) has a piston head (62) and a piston shank (64) connected therewith, the piston head and piston shank being formed integrally from plastics material.

14. Setting device (10) according to claim 13, **characterized in that** the piston head (62) and the piston shank (64) of the selector piston (16) are connected together by way of a connecting section (66) of solid material in which the washer (34) is embedded.

15. Setting device (10) according to any one of the preceding claims, **characterized in that** the washer (34) consists of stainless steel.

## Patentansprüche

1. Stellvorrichtung (10) für die Betätigung einer Schaltstange (12) eines Schaltgetriebes, mit einem in oder an dem Schaltgetriebe montierbaren Zylindergehäuse (14), in dem ein Schaltkolben (16) längsverschiebbar aufgenommen ist, der in dem Zylindergehäuse (14) wenigstens eine wahlweise druckbeaufschlagbare Arbeitskammer (20, 22) begrenzt und einen Kolbengrundkörper (18) aus Kunststoff aufweist, wobei der Schaltkolben (16) mit einer entlang einer Längsachse (24) des Schaltkolbens (16) verlaufenden Aussparung (26) zur Aufnahme eines Endes (28) der Schaltstange (12) versehen und gestaltet ist, mittels einer Befestigungsschraube (30) mit Schraubenkopf (32) an dem Ende (28) der Schaltstange (12) angebracht zu werden, **dadurch gekennzeichnet, dass** in dem Kunststoff des Kolbengrundkörpers (18) eine quer zur Längsachse (24) des Schaltkolbens (16) in die Aussparung (26) vorstehende Ringscheibe (34) formschlüssig eingebettet ist, die entlang der Längsachse (24) des Schaltkolbens (16) gesehen auf einer Vorderseite eine erste Anlagefläche (36) für den Schraubenkopf (32) der Befestigungsschraube (30) und auf einer Rückseite eine zweite Anlagefläche (38) für das Ende (28) der Schaltstange (12) bildet, so dass der Schaltkolben (16) mittels der Befestigungsschraube (30) über die Ringscheibe (34) spielfrei mit der Schaltstange (12) verbunden ist.

2. Stellvorrichtung (10) nach Anspruch 1, **dadurch gekennzeichnet, dass** die erste Anlagefläche (36) und/oder die zweite Anlagefläche (38) eben ist und sich im Wesentlichen senkrecht zur Längsachse (24) des Schaltkolbens (16) erstreckt.

3. Stellvorrichtung (10) nach Anspruch 1 oder 2, **dadurch gekennzeichnet, dass** die erste Anlagefläche (36) und/oder die zweite Anlagefläche (38) ringförmig ist.

4. Stellvorrichtung (10) nach Anspruch 3, **dadurch gekennzeichnet, dass** die erste Anlagefläche (36) und/oder die zweite Anlagefläche (38) kreisringförmig ist.

5. Stellvorrichtung (10) nach einem der vorhergehenden Ansprüche, **dadurch gekennzeichnet, dass** die Ringscheibe (34) am Außenumfang eine von einer kreisrunden Form abweichende Kontur (99) aufweist.

6. Stellvorrichtung (10) nach Anspruch 5, **dadurch gekennzeichnet, dass** die Kontur (99) eine Mehrzahl von Ecken (100) aufweist, die gleichmäßig über dem Umfang der Ringscheibe (34) verteilt sind.

7. Stellvorrichtung (10) nach Anspruch 6, **dadurch gekennzeichnet, dass** die Kontur (99) acht Ecken (100) aufweist, die durch gleich lange Geraden (101) miteinander verbunden sind.

8. Stellvorrichtung (10) nach einem der vorhergehenden Ansprüche, **dadurch gekennzeichnet, dass** alle im Kunststoff des Kolbengrundkörpers (18) eingebetteten Kanten (102) der Ringscheibe (34) verrundet sind.

9. Stellvorrichtung (10) nach einem der vorhergehenden Ansprüche, **dadurch gekennzeichnet, dass** die Aussparung (26) im Schaltkolben (16) wenigstens in einem Teilbereich (95) einen von einer Kreisform abweichenden Querschnitt aufweist, der so gestaltet ist, dass er zu einem Querschnitt des in der Aussparung (26) aufzunehmenden Endes (28) der Schaltstange (12) gegenseitig komplementär ist.

10. Stellvorrichtung (10) nach Anspruch 9, **dadurch gekennzeichnet, dass** der Querschnitt der Aussparung (26) in dem Schaltkolben (16) gestaltet ist, das Ende (28) der Schaltstange (12) aufzunehmen, das eine zylindrische Grundform aufweist und wenigstens in dem Teilbereich (95) mit einer parallel zur Längsachse (24) verlaufenden Abflachung (96) versehen ist.

11. Stellvorrichtung (10) nach einem der vorhergehenden Ansprüche, **gekennzeichnet durch** eine Sensoranordnung (90) zur Erfassung einer axialen Position des Schaltkolbens (16) im Zylindergehäuse (14), mit einem zylindergehäusefesten Sensor (91) und einem am Schaltkolben (16) angebrachten Signalelement (92) .

12. Stellvorrichtung (10) nach Anspruch 11, **dadurch gekennzeichnet, dass** der Kolbengrundkörper (18) mit einem einstückig angeformten Fortsatz (93) zur Aufnahme des Signalelements (92) versehen ist.

13. Stellvorrichtung (10) nach einem der vorhergehenden Ansprüche, **dadurch gekennzeichnet, dass** der Schaltkolben (16) in der Art eines Schaftkolbens ausgebildet ist, wobei der Kolbengrundkörper (18) einen Kolbenkopf (62) und einen sich daran anschließenden Kolbenschaft (64) aufweist, die einstückig aus Kunststoff geformt sind.

14. Stellvorrichtung (10) nach Anspruch 13, **dadurch gekennzeichnet, dass** der Kolbenkopf (62) und der Kolbenschaft (64) des Schaltkolbens (16) über einen Verbindungsabschnitt (66) aus Vollmaterial miteinander verbunden sind, in dem die Ringscheibe (34) eingebettet ist.

15. Stellvorrichtung (10) nach einem der vorhergehenden Ansprüche, **dadurch gekennzeichnet, dass** die Ringscheibe (34) aus Edelstahl besteht.

## Revendications

1. Dispositif de réglage (10) pour actionner une tige de sélecteur (12) d'une transmission, comprenant un boîtier de cylindre (14) qui peut être monté dans ou sur la transmission et dans lequel un piston de sélecteur (16) est reçu pour être longitudinalement déplaçable, le piston délimitant dans le boîtier de cylindre (14), au moins une chambre de travail (20, 22) pouvant être sélectivement chargée avec la pression et ayant un corps de base de piston (18) en matière plastique, dans lequel le piston de sélecteur (16) est prévu avec un évidement (26) s'étendant le long d'un axe longitudinal (24) du piston de sélecteur (16) pour la réception d'une extrémité (28) de la tige de sélecteur (12) et est configuré pour être monté sur l'extrémité (28) de la tige de sélecteur (12) au moyen d'une vis de fixation (30) avec une tête de vis (32), **caractérisé en ce qu'**une rondelle (34) faisant saillie transversalement par rapport à l'axe longitudinal (24) du piston de sélecteur (16) dans l'évidement (26) est encastrée dans la matière plastique du corps de base de piston (18) afin de fournir un couple mécaniquement positif et, comme observé le long de l'axe longitudinal (24) du piston de sélecteur (16), forme, sur un côté avant, une première surface de support (36) pour la tête de vis (32) de la vis de fixation (30) et sur un côté arrière, une seconde surface de support (38) pour l'extrémité (28) de la tige de sélecteur (12) de sorte que le piston de sélecteur (16) a un raccordement sans jeu avec la tige de sélecteur (12) au moyen de la vis de fixation (30) via la rondelle (34).

2. Dispositif de réglage (10) selon la revendication 1, **caractérisé en ce que** la première surface de support (36) et/ou la seconde surface de support (38) est ou sont planaire(s) et s'étend ou s'étendent sensiblement perpendiculairement à l'axe longitudinal (24) du piston de sélecteur (16).

3. Dispositif de réglage (10) selon la revendication 1 ou 2, **caractérisé en ce que** la première surface de support (36) et/ou la seconde surface de support (38) est ou sont annulaire(s).

4. Dispositif de réglage (10) selon la revendication 3, **caractérisé en ce que** la première surface de support (36) et/ou la seconde surface de support (38) est ou sont annulaire(s) de manière circulaire.

5. Dispositif de réglage (10) selon l'une quelconque des revendications précédentes, **caractérisé en ce que** la rondelle (34) a, au niveau de la circonférence externe, un profil (99) qui diffère d'une forme circulairement ronde.

6. Dispositif de réglage (10) selon la revendication 5, **caractérisé en ce que** le profil (99) a une pluralité de coins (100) répartis uniformément autour de la circonférence de la rondelle (34).

7. Dispositif de réglage (10) selon la revendication 6, **caractérisé en ce que** le profil (99) a huit coins (100) raccordés ensemble par des lignes droites (101) de longueur identique.

8. Dispositif de réglage (10) selon l'une quelconque des revendications précédentes, **caractérisé en ce que** tous les bords (102), qui sont encastrés dans la matière plastique du corps de base de piston (18), de la rondelle (34), sont arrondis.

9. Dispositif de réglage (10) selon l'une quelconque des revendications précédentes, **caractérisé en ce que** l'évidement (26) dans le piston de sélecteur (16), au moins dans une région secondaire (95), a une section transversale différant de la forme circulaire, qui est configurée pour être mutuellement complémentaire avec une section transversale de l'extrémité (28) de la tige de sélecteur (12) destinée à être reçue dans l'évidement (26).

10. Dispositif de réglage (10) selon la revendication 9, **caractérisé en ce que** la section transversale de l'évidement (26) dans le piston de sélecteur (16) est configurée pour recevoir l'extrémité (28) de la tige de sélecteur (12), qui a une forme de base cylindrique et est prévue au moins dans la région secondaire (95) avec un méplat (96) s'étendant parallèlement à l'axe longitudinal (24).

11. Dispositif de réglage (10) selon l'une quelconque des revendications précédentes, **caractérisé par** un agencement de capteur (90) pour détecter une position axiale du piston de sélecteur (16) dans le boîtier de cylindre (14), comprenant un capteur (91) fixe par rapport au boîtier de cylindre (14) et un élément de signal (92) monté sur le piston de sélecteur (16).

12. Dispositif de réglage (10) selon la revendication 11, **caractérisé en ce que** le corps de base de piston (18) est prévu avec une saillie formée de manière solidaire (93) pour le montage de l'élément de signal (92).

13. Dispositif de réglage (10) selon l'une quelconque des revendications précédentes, **caractérisé en ce que** le piston de sélecteur (16) est construit sous la forme d'un piston de tige, dans lequel le corps de base de piston (18) a une tête de piston (62) et une tige de piston (64) raccordée avec cette dernière, la tête de piston et la tige de piston étant formées de manière solidaire à partir d'une matière plastique.

14. Dispositif de réglage (10) selon la revendication 13, **caractérisé en ce que** la tête de piston (62) et la tige de piston (64) du piston de sélecteur (16) sont raccordées ensemble au moyen de la section de raccordement (66) en matériau solide dans lequel la rondelle (34) est encastrée.

15. Dispositif de réglage (10) selon l'une quelconque des revendications précédentes, **caractérisé en ce que** la rondelle (34) se compose d'acier inoxydable.
